# EUROPEAN PATENT APPLICATION

(11) **EP 1 493 798 A1**
(43) Date of publication of application: **05.01.2005**
(21) Application number: 04102984.4
(22) Date of filing: 28.06.2004
(51) Int. Cl.: C09K 11/84, G01T 1/00

(54) **Rare earth activated lutetium oxysulfide phosphor for direct x-ray detection.**

(30) Priority: 30.06.2003 EP 03101947
(71) Applicant: AGFA-GEVAERT, 2640 Mortsel (BE)
(72) Inventor: Van den Bergh, Rudy c/o Agfa-Gevaert, 2640, Mortsel (BE); Leblans, Paul c/o Agfa-Gevaert, 2640, Mortsel (BE)

(57) **Abstract**

As a rare earth activated lutetium oxysulfide phosphor with an enhanced X-ray absorption coefficient for direct-X-rays, a scintillating phosphor according to the formula Lu₂O₂S:xM, wherein M is selected from the group of rare earth elements consisting of Eu, Pr and Sm and wherein x is from 0.0001 to 0.2, has been shown to be preferred as said phosphor prompt emits red light, which makes it particularly suitable for use as a scintillator material in a device for direct-radiography (DR).

## Description

### FIELD OF THE INVENTION

The present invention specifically relates to a red light emitting luminescent phosphor suitable for use as a scintillator used in detectors for direct-radiography.

### BACKGROUND OF THE INVENTION

Rare earth oxysulfides have long been recognised in the art as valuable luminescent materials. These phosphors are in the form of a solid solution having a matrix of the rare earth oxysulfide compound with a small amount of an activator or dopant dispersed throughout the matrix. The activator normally is also a rare earth element.

Among such rare earth activated rare earth oxysulfides are the blue-green emitting terbium-activated rare earth oxysulfides having the nominal formula: M₂₋ₓO₂S:x'Tb where x' is 0.001 to 0.2.

The matrix rare earth metal element, designated by M in that formula of these phosphors typically are lanthanum, gadolinium, yttrium, scandium, lutetium, or mixtures of these elements.

As a basic patent US-A 3,725,704 describes an X-ray conversion screen which employs a phosphor consisting essentially of at least one oxysulfide selected from the group consisting of lanthanum oxysulfide, gadolinium oxysulfide and lutetium oxysulfide, in which from about 0.005 - 8 % of the host metal ions have been replaced by trivalent terbium ions. Conversion screens utilizing one of the phosphors of that invention, when placed in an X-ray beam, convert X-ray photons to radiation in the blue and green portion of the visible spectrum, principally in the green portion, between about 500 and 600 nm.

In US-A 3,872,309 an improved radiographic screen consisting of yttrium, lanthanum, gadolinium or lutetium oxysulfide or oxyhalide activated with the rare earth metals Dy, Er, Eu, Ho, Nd, Pr, Sm, Tb, Tm or Yb and coated on a metallic substrate containing Ag, Sn, Te, Tl, W, Pt, Au, Hg, Ta or Pb. The majority of the named activators, however, produce phosphors of low emission intensity. Only Tm produces blue emission suitable for recording on ordinary photographic film, but the energy conversion efficiency for this activator is relatively low. The other named activators produce emission ranging from the green to the infrared, all of which require specially sensitized film. The most efficient oxysulfides are those activated with terbium. These phosphors, however, have a green emission necessitating the use of special green-sensitized photographic film for optimum results. The remaining oxysulfides are typically phosphors of low emission intensity which produce emission ranging from green to infrared. The most efficient of the oxyhalides is terbium-activated gadolinium which emits principally in the green region and suffers the disadvantage that it is unstable in the presence of atmospheric moisture undergoing marked reduction in energy conversion efficiency as a result.

An electron-beam excited display tube useful in a display apparatus as a color cathode-ray tube, wherein the content of europium as a activator for a rare earth oxysulfide fluorescent material used as the red emission component therein, within the range of 0.05 to 2.0 mol %, provides a very bright and low cost electron-beam excited display tube without any uneven color reproduction has been described in US-A 4,814,666.

Most preferred phosphors of the Gd₂O₂S:Tb type are known to be very useful in the field of X-ray intensifying screens in radiation image conversion type screen-film systems, wherein precisely matching the spectral sensitivity of the X-ray film and the emission of the phosphor is a main object in order to reach the highest speed for that screen-film combination.

Use in e.g. chest-radiography and mammography has been very successful until now, but recently, in the hospitals the tendency is increasing to obtain X-ray images on computer monitor immediately after X-ray exposure of the patient.

By storing and transmitting that digitized information efficiency and speed of diagnosis is enhanced. Accordingly "direct radiography" providing directly digital diagnostic X-ray images, after exposure of an adapted detector panel in a radiographic apparatus, becomes preferred instead of the conventional screen/film system mentioned hereinbefore. The X-ray quanta are then transformed into electric signals by making use of a solid-state flat detector as "image pick-up" element. Such a flat detector is commonly called a "flat panel detector" and is two-dimensionally arranged. The electrical charge thus obtained is thus read out as an electric signal by the read-out element, two-dimensionally arranged in a fine area unit.

Furtheron an indirect type flat panel detector is known, in which the X-ray energy is converted into light by a scintillator, and in which the converted light is converted into the electric charge by the photoelectric conversion element. Making use therein of a photoconductive material as a detecting means, such as amorphous selenium (a-Se), in which the negative electrical charge of an electron and the positive electrical charge of a hole are generated by the X-ray energy, said X-ray energy is directly converted into those separated electrical charges. A detector based on a-Se thin-film transistor panel thus converts X-ray photons into analog voltage, which is then converted into digital signals by analog-to-digital converters. As the detector is self-scanning, it allows digital X-ray images to be produced without the need for a dedicated reader of the type as used in CR. such as a-Si two-dimensionally arranged in a fine area unit. The electrical charge is read out again as an electric signal by the photoelectric conversion read-out element, two-dimensionally arranged in a fine area unit.

Images are sent directly from the detector to a compatible workstation, where they can be routed within an image management network.

Moreover a direct radiography detector is known in which the X-ray energy is converted into light by a scintillator, and wherein the converted light is projected on one or more CCD or CMOS sensors which are arranged matrix-wise in the same plane, through a converging body such as a lens or optical fiber. In the inside of the CCD or CMOS sensor, via photoelectric conversion, and charge-voltage conversion, an electric signal is obtained in every pixel. This type of detector is also defined, therefore, as a solid state plane detector.

As these electronic sensors or components in the field of direct-radiography are more sensitive in the longer wavelength ranges, and more particularly in the red wavelength range, it would thus be desirable to have the capability to adjust and enhance the red emission signal of the phosphor emission to tailor the phosphor emission to the spectral sensitivity of the electronic detectors.

The electronic readout sequence is initiated immediately after the X-ray exposure, and within a time of seconds the image data are available for display on a video monitor, data storage, data transmission and hard-copy generation. DR provides immediate digital image capture and conversion. These processes take place within the imaging receptor, which is called a digital array. Whithin seconds, the image can be sent via a network to a workstation or laser printer for display or hard-copy output.

As all DR images are available for immediate previewing prior to transmission for film production, this can reduce the cost of repeat films due to technique, motion or positioning errors. The technologist can easily correct image positioning while the patient is still on the X-ray table, and over- or under-exposed images are adjusted automatically without incurring film waste.

Reducing repeat film speeds patient throughput for better patient care and room utilization, while permitting technologists to more effectively use X-ray equipment.

On the diagnostic side, DR improves efficiency by allowing generated images to be sent anywhere: a healthcare facility's network structure comprising workstations, laser printers, archives, in the same facility, a facility in the next town, or even a facility in another part of the world provides this advantage.

Due to the clinically and technically demanding nature of breast X-ray imaging, mammography e.g. still remains one of the few essentially film-based radiological imaging techniques in modern medical imaging.

DR consists of a detector based on an amorphous selenium thin-film transistor panel that converts X-ray photons into analog voltage, which is then converted into digital signals by analog-to-digital converters. The detector is self-scanning, allowing digital X-ray images to be produced without the need for a dedicated reader of the type used in CR. Images are sent directly from the detector to a DICOM-compatible workstation, where they can be routed within an image management network.

There are a range of possible benefits available if a practical and economical direct digital imaging technique can be introduced to routine clinical practice, not only when scintillators used therefor are prompt emitting radiation energy in the desired wavelength range, the sensor or detector is sensitive to, but the more when the same scintillator shows no or only low afterglow.

### OBJECTS AND SUMMARY OF THE INVENTION

It is an object of the present invention to provide a scintillator showing ability to convert X-ray energy into light of longer wavelengths.

More preferably it is an object of the present invention to provide a scintillator showing ability to convert X-ray energy into red light, wherefor electronic detectors are sensitive, and moreover, to show low afterglow levels.

The above-mentioned advantageous effects are realised by providing a phosphor screen coated with a phosphor having the specific features set out in claim 1. Specific features for preferred embodiments of the invention are set out in the dependent claims.

Further advantages and embodiments of the present invention will become apparent from the following description.

### BRIEF DESCRIPTION OF THE DRAWINGS

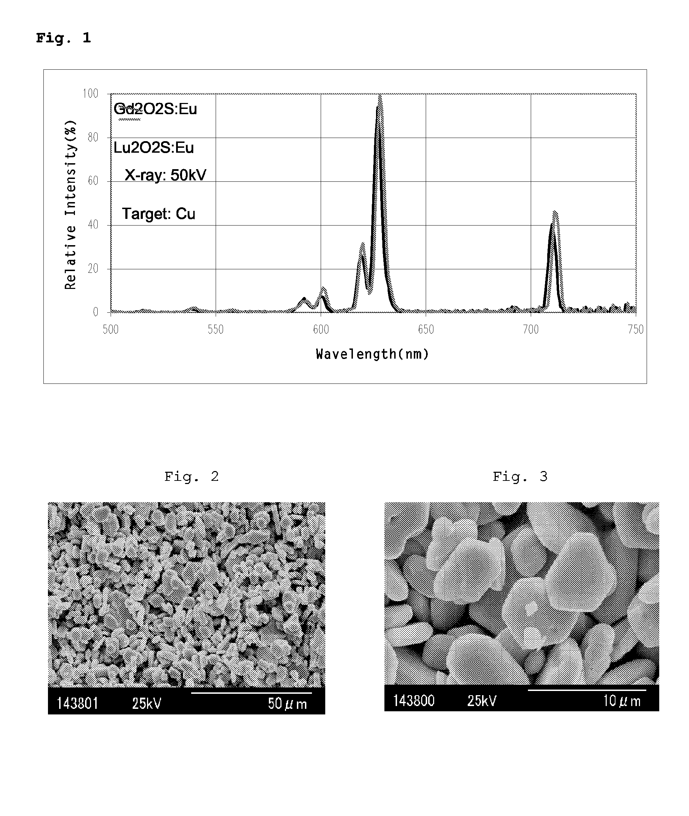

Fig. 1 shows relative intensities for emission spectra of the preferred Lu₂O₂S:Eu verus Gd₂O₂S:Eu phosphor under X-ray excitation (50 kV ; target: Cu) - Lu₂O₂S:Eu being shifted more hypsochromically.
Fig. 2 provides a scanning electron microscopic photograph (SEM) of Gd₂O₂S:Eu phosphor crystals.
Fig. 3 provides a scanning electron microscopic photograph (SEM) of Lu₂O₂S:Eu phosphor crystals (5 x higher enlargement factor).

### DETAILED DESCRIPTION OF THE INVENTION

It has unexpectedly been found that rare earth activated or doped lutetium oxysulfide scintillators, wherein as a dopant or activator, selected from the group of rare earth elements consisting of Eu, Pr and Sm is present, said scintillators are superior in order to attain the objects set forth hereinbefore. More preferably a europium doped lutetium oxysulfide phosphor is advantageously applied. Presence, besides, of small amounts of gadolinium and/or yttrium is not excluded therein.

A scintillator panel according to the present invention emitting red light upon exposure with X-rays, is, in one embodiment characterised in that said scintillator layer in said panel is provided with a rare earth activated lutetium oxysulfide phosphor according to the formula Lu₂O₂S:xM, wherein M is selected from the group of rare earth elements consisting of Eu, Pr and Sm and wherein x is from 0.0001 to 0.2, and, more preferred from 0.001 up to 0.01. In a most preferred embodiment said amounts of dopant or activator used in the Lu₂O₂S:M phosphor are in the range of about 0.002, and M is europium. The expression "range of about 0.002" means "0.002 ± 0.0002", corresponding with an amount of ± 10 %.

In view indeed of the relative intensity of emission spectra generated under X-ray excitation, the peak wavelength in the red wavelength range and its afterglow characteristics, preference should be given to Lu₂O₂S:xEu as most desired scintillator.

According to the present invention said scintillator panel has its main emission in the wavelength range from 600 to 750 nm

Other differences between the preferred Lu₂O₂S:xEu and e.g. a Gd₂O₂S:xEu are further related with differences in specific gravity in that the specific gravity of the lutetium phosphor exceeds the specific gravity of the corresponding gadolinium phosphor with about 15-20 %.

Specific gravity values of 8.84 and 7.50 have experimentally been measured.

Afterglow intensities of the lutetium phosphor were further found to be more favorable than afterglow intensities of the corresponding gadolinium phosphor. This effect has been shown to become more pronounced especially after shorter times: ratios between both changing from 1:3 (after 30 s) to about 1:1.25 (after 60 s) are indicative for a lower afterglow level that has already been attained a short time after emission of scintillating energy.

It is preferred that only one activator as e.g. the preferred europium is present as a dopant and that the phosphor should, in that case, be free of samarium.

As a preferred particle size, the phosphor particles in the distribution of the Lu₂O₂S:Eu phosphor should be in the range of from 2 µm up to 10 µm, and in a preferred embodiment an average particle size between 4 µm and 7 µm should be recommended.

The phosphor layer(s) in screens or panels wherein the Lu₂O₂S:xM phosphor is coated normally comprises one or more binders to give the layers structural coherence. In general, useful binders are those conventionally used for this purpose in the art. They can be chosen from a wide variety of known organic polymers that are transparent to X-rays. Binder materials commonly used for this purpose include but are not limited to, natural polymers such as proteins (for example gelatins), polysaccharides (such as dextrans), poly(vinyl acetate), ethyl cellulose, vinylidene chloride polymers, cellulose acetate butyrate, polyvinyl alcohol, sodium o-sulfobenzaldehyde acetal of poly(vinyl alcohol), chlorosulfonated poly(ethylene), a mixture of macromolecular bisphenol poly(carbonates), and copolymers comprising bisphenol carbonates and poly(alkylene oxides), aqueous ethanol soluble nylons, poly(alkyl acrylates and methacrylates) and copolymers of poly(alkyl acrylates and methacrylates and acrylic acid or methacrylic acid) and poly(vinyl butryal), poly(urethanes) and rubbery elastomers. Mixtures of binders can be used if desired. These and other useful binder materials are described in US-A's 2,502,529; 2,887,379; 3,617,285; 3,300,310; 3,300,311; 3,743,833; 4,574,195; 5,569,530 and in Research Disclosure Vol. 154, February 1977, item 15444 and Vol. 182, June 1979. Particularly useful binders are KRATON® rubbers such as those commercially available from SHELL, The Netherlands. In that case the binding medium consists essentially of one or more block copolymers having a saturated elastomeric midblock and a thermoplastic styrene endblock, and has a bound polar functionality of at least 0.5% by weight. Any conventional ratio of phosphor to binder can be used in the panels of this invention, but thinner phosphor layers and sharper images are obtained when a high weight ratio of phosphor to binder is used. Said layer or layers of phosphor particles preferably has (have) a total dry thickness of at least 10 µm, more preferably a thickness in the range of from 50 to 1000 µm and most preferably from about 100 µm to about 400 µm. Preferably the ratio by volume of phosphor to binding medium is 92:8 or less. In a preferred embodiment the ratio by volume of phosphor to binding medium is more than 70/30, and even more preferred the ratio by volume of phosphor to binding medium is at least 85/15. More or less binder can however be used if desired for specific applications.

The one or more phosphor layers can include other addenda that are commonly employed for various purposes, including but not limited to reducing agents (such as oxysulfur reducing agents), phosphites and organotin compounds to prevent yellowing, dyes and pigments for light absorption, plasticizers, dispersing aids, surfactants, and antistatic agents, all in conventional amounts.

The scintillator screens or panels of the present invention preferably include a protective overcoat layer disposed on the one or more phosphor layers. This layer is substantially clear and transparent to the light emitted by the phosphor and provides abrasion and scratch resistance and durability. It may also be desirable for the overcoat layer to provide a barrier to water or water vapor that may degrade the performance of the phosphor. Further, it may be desirable to incorporate components into the overcoat layer that prevent yellowing of the storage panel.

The protective overcoat layer is composed predominantly of one or more film-forming binder materials that provide the desired properties. Generally, these are the same materials that are used as binders in the phosphor layer(s). However, they can be different materials as well. Many such materials are known in the art, including but not limited to, polyesters [such as poly(ethylene terephthalate)], polyethylene, polyamides, poly(vinyl butyral), poly(vinyl formal), polycarbonates, vinyl chloride polymers, acrylic polymers [such as poly(methyl methacrylate) and poly(ethyl methacrylate)], and various polymer blends of fluorinated polymers and non-flourinated polymers [such as blends of polyacrylates and vinylidene fluoride polymers. Mixtures of materials can be used if desirable. Other useful overcoat materials are described in US-A's 4,574,195; 5,401,971; 5,227,253 and 5,475,229. Preferred materials are poly(vinylidene fluoride-co-tetrafluoroethylene), poly(vinylidene fluoride-co-cholorotrifluoroethylene), blends of poly(vinylidene fluoride-co-tetrafluoroethylene) and poly[(C₁₋₂ alkyl)methacrylate] and poly-para-xylylenes.

The protective overcoat may be formed through the use of radiation curable compositions as those described in US-A 5,149,592 and and may contain a white pigment as disclosed in EP-A 0 967 620.

In addition to the film forming polymer, the overcoat may contain a variety of agents designed to enhance its utility. Such agents include solid particulate materials or mattes as described in US-A 4,059,768 and antistatic agents as described in US-A's 4,666,774 and 5,569,485 and in EP-A 0 752 711. The protective overcoat generally has a total dry thickness of at least 3 µm, and preferably from about 5 µm up to about 10 µm.

According to the present invention a device comprising a combination of a scintillator panel, as set out above, and a photoconductive element is characterised in that said panel and said element are arranged in contact, as close as possible.

According to the present invention a radiographic imaging system for direct X-ray detection is further provided, thus comprising a device as set forth hereinbefore. In said radiographic imaging system according to the present invention said photoconductive element comprises a photoconductive material layer for absorbing light emitted by said scintillator panel, and further comprises an interdigital contact structure in the photoconductive material layer, said contact structure comprising a patterned plurality of electrodes, one of which is coupled to a storage capacitor wherein the storage capacitor stores charges from the photoconductive material layer, and wherein the photoconductive material layer further comprises amorphous selenium.

According to the present invention a method is further offered for detecting X-ray radiation transmitted through an object to be imaged by said radiographic imaging system according to the present invention as set forth, said method comprising the steps of
- contacting said object to be imaged with the scintillator panel of the present invention,
- exposing said object being imaged by X-rays,
- capturing, pixe-wise, light emitted by said scintillator panel by said photoconductive element,
- generating image data and making them available for direct viewing on a video monitor, for data storage, for data transmission and for hard-copy generation.

According to the method of the present invention as set forth, said X-rays have an energy in the range of 20-25 keV (as for examination of soft tissues).

In another embodiment according to the method of the present invention, said X-rays have an energy in the range of 40-120 keV (as for examination of bones).

In still another embodiment according to the method of the present invention, said X-rays have an energy up to 300 keV, and even up to 20 MeV.

### Examples

While the present invention will hereinafter be described in connection with preferred embodiments thereof, it will be understood that it is not intended to limit the invention to those embodiments.

Both a comparative Gd₂O₂S:Eu and an inventive Lu₂O₂S:Eu were prepared according to the same procedures as e.g. used for Gd₂O₂S:Eu.

**Table 1**

| Phosphor | Afterglow (30 s) | Afterglow (60 s) | Specific Gravity |
|---|---|---|---|
| Gd₂O₂S:Eu | 19.1 | 6.9 | 7.5 |
| Lu₂O₂S:Eu | 6.9 | 5.5 | 8.84 |

From the data in Table 1 it is clear that a higher specific gravity has been measured for het preferred Lu₂O₂S:Eu phosphor, that is further characterised by a lower afterglow (the more after shorter times, following X-ray excitation).

Having described preferred embodiments of the current invention, it will now be apparent to those skilled in the art that numerous modifications can be made therein without departing from the scope of the invention as defined in the appending claims.

## Claims

1. A scintillator panel emitting red light upon exposure with X-rays, **characterised in that** a scintillator layer in said panel is a layer comprising a luminescent rare earth activated lutetium oxysulfide phosphor according to the formula Lu₂O₂S:xM, wherein M is selected from the group of rare earth elements consisting of Eu, Pr and Sm, and wherein x is from 0.0001 to 0.2.

2. A scintillator panel according to claim 1, wherein, in the formula of the Lu₂O₂S:xM phosphor, x is in the range of from 0.001 to 0.01.

3. A scintillator panel according to claim 1, wherein, in the formula of the Lu₂O₂S:xM phosphor, M is europium and x is in the range of about 0.002.

4. A scintillator panel according to any one of the claims 1 to 3, wherein said panel has its main emission in the wavelength range from 600 to 750 nm.

5. A device comprising a combination of a scintillator panel, according to any one of the claims 1 to 4, and a photoconductive element, **characterised in that** said panel and said element are arranged in contact, as close as possible.

6. A radiographic imaging system for direct X-ray detection comprising a device according to claim 5.

7. Radiographic imaging system according to claim 6, wherein said photoconductive element comprises a photoconductive material layer for absorbing light emitted by said scintillator panel.

8. Radiographic imaging system according to claim 6 or 7, further comprising an interdigital contact structure in the photoconductive material layer, said contact structure comprising a patterned plurality of electrodes, one of which is coupled to a storage capacitor wherein the storage capacitor stores charges from the photoconductive material layer, and wherein the photoconductive material layer further comprises amorphous selenium.

9. Method of detecting X-ray radiation transmitted through an object to be imaged by said radiographic imaging system according to any one of the claims 6 to 8, comprising the steps of
- contacting said object to be imaged with the scintillator panel,
- exposing said object being imaged by X-rays,
- capturing, pixe-wise, light emitted by said scintillator panel by said photoconductive element,
- generating image data and making them available for direct viewing on a video monitor, for data storage, for data transmission and for hard-copy generation.

10. Method according to claim 9, wherein said X-rays have an energy in the range of 20-25 keV.

11. Method according to claim 9, wherein said X-rays have an energy in the range of 40-120 keV.

12. Method according to claim 9, wherein said X-rays have an energy in the range up to 300 keV.

13. Method according to claim 9, wherein said X-rays have an energy in the range up to 20 MeV.■
